# EUROPEAN PATENT APPLICATION

(11) **EP 4 737 237 A1**
(43) Date of publication of application: **06.05.2026**
(21) Application number: 24838453.9
(22) Date of filing: 20.05.2024
(51) Int. Cl.: B60T 13/74, B60T 11/04

(54) **ELECTROMECHANICAL BRAKE APPARATUS COMPRISING IN-SHAFT LOCKING MECHANISM, SYSTEM, AND VEHICLE**

(30) Priority: 13.07.2023 CN 202321852965 U
(71) Applicant: Huawei Digital Power Technologies Co., Ltd., Shenzhen, Guangdong 518043 (CN)
(72) Inventor: MAO, Yan, Shenzhen, Guangdong 518043 (CN); YAN, Keyu, Shenzhen, Guangdong 518043 (CN); WU, Xiaopeng, Shenzhen, Guangdong 518043 (CN)
(74) Representative: Maiwald GmbH
(86) International application number: PCT/CN2024/094144
(87) International publication number: WO 2025/011194

(57) **Abstract**

This application provides an electro-mechanical braking apparatus with an in-shaft locking mechanism, an electro-mechanical braking system, and a vehicle. The electro-mechanical braking apparatus includes a brake motor, a gearbox, a brake, and the locking mechanism. The brake motor is in transmission connection to the brake via the gearbox and drives the brake to brake the vehicle. The gearbox includes a gear shaft for implementing a transmission function. The locking mechanism is located on a side of the gearbox in an axial direction of the gear shaft. The locking mechanism includes a clutch, an axial moving part, and a locking motor. The clutch is accommodated in an inner hole of the gear shaft. The axial moving part is configured to move relative to the clutch in the axial direction of the gear shaft and control the clutch to lock or release the gear shaft. The locking motor is configured to drive the axial moving part to move away from or toward the clutch. The locking mechanism of the electro-mechanical braking apparatus in this application is disposed inside the gear shaft of the gearbox, and the electro-mechanical braking apparatus is small in volume and reliable in parking.

## Description

### CROSS-REFERENCE TO RELATED APPLICATIONS

This application claims priority to Chinese Patent Application No. 202321852965.4, filed with the China National Intellectual Property Administration on July 13, 2023 and entitled "ELECTRO-MECHANICAL BRAKING APPARATUS WITH IN-SHAFT LOCKING MECHANISM, SYSTEM, AND VEHICLE", which is incorporated herein by reference in its entirety.

### TECHNICAL FIELD

This application relates to the field of vehicle technologies, and in particular, to an electro-mechanical braking apparatus with an in-shaft locking mechanism and a vehicle.

### BACKGROUND

An electro-mechanical braking apparatus (electro-mechanical brake, EMB) uses a motor and a mechanical transmission mechanism together to drive a brake to brake. The electro-mechanical braking apparatus has a simple structure, a sensitive response, stable load transfer, no hydraulic pipe, and high transfer efficiency. The electro-mechanical braking apparatus can improve safety, maneuverability, and comfort of a vehicle.

The electro-mechanical braking apparatus is usually further equipped with a locking mechanism to implement a parking function. Limited by internal space of the vehicle, the electro-mechanical braking apparatus needs to properly arrange relative positions of the motor, the mechanical transmission mechanism, the brake, and the locking mechanism, to implement miniaturization while implementing the function, and save the internal space of the vehicle.

### SUMMARY

This application provides an electro-mechanical braking apparatus with an in-shaft locking mechanism and a vehicle. The electro-mechanical braking apparatus has a small volume and implements parking. This application specifically includes the following solutions.

According to a first aspect, this application provides an electro-mechanical braking apparatus with an in-shaft locking mechanism. The electro-mechanical braking apparatus includes a brake motor, a gearbox, and the locking mechanism. The brake motor drives a brake via the gearbox to brake a vehicle. The gearbox includes a gear shaft configured to implement a transmission function. The locking mechanism is located on a side of the gearbox in an axial direction of the gear shaft. The locking mechanism includes a clutch, an axial moving part, and a locking motor.

The clutch is accommodated in an inner hole of the gear shaft.

The axial moving part is configured to move relative to the clutch in the axial direction of the gear shaft and control the clutch to lock or release the gear shaft.

The locking motor is configured to drive the axial moving part to move away from or toward the clutch.

In this application, the electro-mechanical braking apparatus drives the gearbox via the brake motor to rotate, to drive the brake to brake the vehicle. When the vehicle is parked, the gear shaft of the gearbox can be locked by the locking mechanism, to control the gearbox to stop transmission. In this case, the brake locks a brake disc to implement a parking function.

In this application, the electro-mechanical braking apparatus drives the axial moving part via the locking motor to move away from or toward the clutch, to drive the clutch to lock or release the gear shaft. In this application, the clutch of the electro-mechanical braking apparatus is disposed in the inner hole of the gear shaft. This reduces an overall volume of the locking mechanism. Therefore, the electro-mechanical braking apparatus in this application has a small volume while implementing a parking function.

In an implementation, the clutch includes an inner gear and a movable part.

The inner gear is coaxially fastened to the gear shaft, an outer circumferential surface of the inner gear is provided with a groove, an opening of the groove faces an inner circumferential surface of the inner hole of the gear shaft, and a groove depth of the groove gradually decreases in a circumferential direction of the gear shaft.

The movable part is configured to move in the groove in the circumferential direction of the gear shaft.

In this implementation, a groove depth of the groove defined by the clutch may be changed. In this case, when the movable part moves in the groove to a position with a large groove depth, the movable part and the inner circumferential surface of the inner hole of the gear shaft are separated or have a small contact force, and the gear shaft can rotate in the gearbox and implement the transmission function of the gearbox. When the movable part moves in the groove to a position with a small groove depth, the contact force between the movable part and the inner circumferential surface of the inner hole of the gear shaft is large, and a friction force between the gear shaft and the movable part increases accordingly, so that the gear shaft cannot rotate in the gearbox, and the transmission function of the gearbox is suspended. In this implementation, the clutch can release or lock rotation of the gear shaft.

In an implementation, the inner gear includes at least two grooves, a quantity of movable parts is the same as a quantity of grooves, and each groove is configured to accommodate one movable part.

The at least two grooves are equally spaced from each other in a circumferential direction of the inner gear.

A minimum groove depth end of one of two adjacent grooves is close to a maximum groove depth end of the other groove in the circumferential direction of the inner gear.

In this implementation, the at least two grooves are equally spaced from each other in the circumferential direction of the inner gear, and minimum groove depth ends of the grooves are located on same sides of the grooves in the circumferential direction of the inner gear, so that the movable parts can move toward a same rotation direction in the circumferential direction of the inner gear, and the contact force between the movable part and the inner circumferential surface of the inner hole of the gear shaft changes synchronously. This facilitates locking or releasing of the gear shaft by the clutch.

In an implementation, a minimum groove depth of each groove is less than a length of the movable part in a radial direction of the inner gear, and a maximum groove depth of each groove is greater than the length of the movable part in the radial direction of the inner gear.

In this implementation, the minimum groove depth of each groove is less than the length of the movable part in the radial direction of the inner gear. This can ensure that when each movable part moves in the corresponding groove to the minimum groove depth end, a reliable contact force and a reliable friction force are generated between the movable part and the inner circumferential surface of the inner hole. The maximum groove depth of each groove is greater than the length of the movable part in the radial direction of the inner gear. This can ensure that the movable part is separated from the inner circumferential surface of the inner hole when each movable part moves in the corresponding groove to the maximum groove depth end.

In an implementation, the clutch includes an elastic part. The elastic part is configured to cooperate with the axial moving part to drive the movable part to move back and forth in the circumferential direction of the inner gear.

The axial moving part moves toward the clutch and drives the movable part to move clockwise in the circumferential direction of the inner gear, and when the axial moving part moves away from the clutch, the elastic part is configured to drive the movable part to move counterclockwise in the circumferential direction of the inner gear.

Alternatively, the axial moving part moves toward the clutch and drives the movable part to move counterclockwise in the circumferential direction of the inner gear, and when the axial moving part moves away from the clutch, the elastic part is configured to drive the movable part to move clockwise in the circumferential direction of the inner gear.

In this implementation, the elastic part may be configured to drive the movable parts to move synchronously in the grooves, and rotation directions of the movable parts are the same.

In an implementation, the clutch includes an end cover.

The end cover is disposed on a side that is of the inner gear and that is close to the locking motor in the axial direction of the gear shaft, an end face that is of the end cover and that faces the locking motor includes a fitting opening, the fitting opening communicates with the groove in the axial direction of the gear shaft, and the axial moving part drives the movable part through the fitting opening.

In this implementation, the end cover may be configured to cover the groove and limit a sliding track of the movable part in the groove. The end cover is provided with the fitting opening facing the locking motor, so that the axial moving part can pass through the fitting opening to drive the movable part to move.

In an implementation, the axial moving part includes a transmission portion and a pushing portion.

The transmission portion is configured to be in transmission connection to a motor shaft of the locking motor and move in a direction of the motor shaft of the locking motor with rotation of the motor shaft of the locking motor.

The pushing portion is configured to receive a driving force of the transmission portion to move in a direction of the motor shaft of the locking motor and drive the movable part.

In this implementation, the transmission portion of the axial moving part is configured to convert rotation motion of the motor shaft of the locking motor to displacement of the pushing portion in the axial direction of the motor shaft, to implement cooperative movement of the pushing portion and the movable part.

In an implementation, an end that is of the pushing portion and that faces the clutch includes a fitting slope, and a tilt direction of the fitting slope intersects the axial direction of the motor shaft of the locking motor.

In this implementation, with cooperation between the fitting slope and the movable part, a pushing force applied by the pushing portion on the movable part can be reduced, thereby reducing power of the locking motor and reducing a volume of the locking motor.

In an implementation, the transmission portion includes a transmission screw and a threaded hole. The threaded hole penetrates the transmission portion in the direction of the motor shaft of the locking motor. The transmission screw is sleeved on the motor shaft of the locking motor and is fastened to the motor shaft of the locking motor. The transmission portion is sleeved on the transmission screw through the threaded hole. An external thread of the transmission screw is engaged with an internal thread of the threaded hole.

In this implementation, with cooperation between the screw and the threaded hole, a rotation action of the motor shaft of the locking motor can be reliably converted to a displacement action of the transmission portion in the axial direction.

In an implementation, in the axial direction of the gear shaft, the axial moving part is located between the clutch and the locking motor, and axes of the locking motor, the axial moving part, the clutch, and the gear shaft coincide.

In this implementation, the axes of the locking motor, the axial moving part, the clutch, and the gear shaft coincide, so that power output by the locking motor is evenly distributed to grooves of the inner gear.

In an implementation, in the axial direction of the gear shaft, the brake is arranged opposite to the locking mechanism.

In a direction perpendicular to the gear shaft, the brake is arranged adjacently to the brake motor.

In this implementation, because volumes of the brake and the brake motor are large, the brake and the brake motor may be disposed on a same side of the gearbox, and the locking mechanism with a small volume is disposed on the other side of the gearbox, to properly arrange the electro-mechanical braking apparatus and reduce a volume.

According to a second aspect, this application provides an electro-mechanical braking system. The electro-mechanical braking system includes a brake and the electro-mechanical braking apparatus provided in any one of the foregoing implementations, and the electro-mechanical braking apparatus is configured to drive the brake to brake a vehicle.

In an axial direction of a gear shaft of a gearbox in the electro-mechanical braking apparatus, the brake is arranged opposite to a locking mechanism in the electro-mechanical braking apparatus.

In a direction perpendicular to the gear shaft, the brake is arranged adjacently to a brake motor in the electro-mechanical braking apparatus.

The electro-mechanical braking system provided in the second aspect of this application implements braking by using the electro-mechanical braking apparatus provided in the first aspect of this application. The electro-mechanical braking apparatus provided in the first aspect of this application reduces a volume of the electro-mechanical braking apparatus while implementing a parking function, and both internal space and reliability of the electro-mechanical braking system in this application are improved.

In other words, the electro-mechanical braking system provided in the second aspect of this application carries the electro-mechanical braking apparatus provided in the first aspect of this application. Therefore, the electro-mechanical braking system provided in the second aspect of this application has all possible beneficial effect of the electro-mechanical braking apparatus provided in the first aspect of this application.

In an implementation, the gearbox includes a planetary gear train. An axis of the planetary gear train coincides with an axis of the gear shaft, and the gear shaft is disposed at an input end of the planetary gear train. An output end of the planetary gear train is in transmission connection to a reversing mechanism of the brake.

In this implementation, the planetary gear train may achieve a large rotation speed ratio change in small space, an inner diameter of a planetary input gear is large, and the locking mechanism may be arranged in the internal space of the planetary input gear.

In an implementation, the reversing mechanism of the brake includes a ball screw. The ball screw includes a screw rod and a screw sleeve that are engaged with each other. The screw rod is in coaxial transmission with the output end of the planetary gear train. The screw sleeve of the ball screw is configured to push a friction plate of the brake to move in an axial direction of the reversing mechanism to brake the vehicle.

In this implementation, the ball screw has high transmission precision and a small friction loss, and can improve transmission efficiency of the electro-mechanical braking apparatus by cooperating with the planetary gear train.

In an implementation, the gearbox includes a motor gear and the planetary input gear. The motor gear is coaxially fastened to a motor shaft of the brake motor, and the planetary input gear is coaxially fastened to the gear shaft. In the direction perpendicular to the gear shaft, the motor gear and the planetary input gear are spaced from each other and in transmission connection.

In this implementation, the motor gear is in transmission connection to the planetary input gear, so that power of the brake motor can be reliably transferred to the planetary gear train, and a volume of the gearbox can be reduced.

According to a third aspect, this application provides a vehicle, including a wheel and the electronic-mechanical braking system provided in any one of the foregoing implementations. The electronic-mechanical braking system is configured to brake the wheel.

The vehicle provided in the third aspect of this application is braked by using the electronic mechanical braking system provided in the second aspect of this application. The electronic-mechanical braking system provided in the second aspect of this application carries the electronic-mechanical braking apparatus provided in the first aspect of this application. The electronic-mechanical braking apparatus provided in the first aspect of this application reduces a volume of the electronic-mechanical braking apparatus while implementing a parking function, and both internal space and reliability of the vehicle in this application are improved.

In other words, because the vehicle in this application carries the electro-mechanical braking system in this application, the vehicle has all possible beneficial effect of the electro-mechanical braking system in this application.

### BRIEF DESCRIPTION OF DRAWINGS

FIG. 1 is a diagram of an operating scenario of a vehicle according to an embodiment of this application;
FIG. 2 is a plane diagram of a partial structure of an electro-mechanical braking apparatus from a view angle according to an embodiment of this application;
FIG. 3 is a diagram of a structure of an appearance of a brake from a view angle according to an embodiment of this application;
FIG. 4 is a diagram of a cross-sectional structure of the brake from a view angle according to the embodiment shown in FIG. 3 of this application;
FIG. 5 is a diagram of a plane structure of an electro-mechanical braking apparatus from a view angle according to an embodiment of this application;
FIG. 6 is a diagram of a structure of an appearance of an electro-mechanical braking apparatus in which a part of the structure is omitted from a view angle according to an embodiment of this application;
FIG. 7 is a diagram of a structure of the electro-mechanical braking apparatus in which the part of the structure is omitted from another view angle according to the embodiment shown in FIG. 6 of this application;
FIG. 8 is a diagram of a structure of an appearance of an electro-mechanical braking apparatus in which a part of the structure is omitted from a view angle according to an embodiment of this application;
FIG. 9 is a diagram of a structure of an appearance of the electro-mechanical braking apparatus in which the part of the structure is omitted from another view angle according to the embodiment shown in FIG. 8 of this application;
FIG. 10 is a diagram of a structure of an appearance of the electro-mechanical braking apparatus in which the part of the structure is omitted from a view angle according to the embodiment shown in FIG. 8 of this application;
FIG. 11 is a diagram of an exploded structure of the electro-mechanical braking apparatus in which the part of the structure is omitted from a view angle according to the embodiment shown in FIG. 10 of this application;
FIG. 12 is a diagram of a structure of an appearance of a clutch of the electro-mechanical braking apparatus in which the part of the structure is omitted from a view angle according to the embodiment shown in FIG. 11 of this application;
FIG. 13 is a diagram of a cross-sectional structure of the electro-mechanical braking apparatus in which the part of the structure is omitted from a view angle according to the embodiment shown in FIG. 10 of this application;
FIG. 14 is a diagram of a cross-sectional structure of a clutch of the electro-mechanical braking apparatus in which the part of the structure is omitted from a view angle according to the embodiment shown in FIG. 13 of this application;
FIG. 15 is a diagram of a partial cross-sectional structure of a locking mechanism of the electro-mechanical braking apparatus in which the part of the structure is omitted from a view angle according to the embodiment shown in FIG. 13 of this application;
FIG. 16 is a diagram of an exploded structure of a locking mechanism of the electro-mechanical braking apparatus in which the part of the structure is omitted from a view angle according to the embodiment shown in FIG. 11 of this application;
FIG. 17 is a diagram of a structure of an appearance of an electro-mechanical braking apparatus in which a part of the structure is omitted from a view angle according to an embodiment of this application;
FIG. 18 is a diagram of a structure of an appearance of the electro-mechanical braking apparatus in which the part of the structure is omitted from another view angle according to the embodiment shown in FIG. 17 of this application;
FIG. 19 is a diagram of a structure of an appearance of the electro-mechanical braking apparatus in which the part of the structure is omitted from still another view angle according to the embodiment shown in FIG. 17;
FIG. 20 is a diagram of a cross-sectional structure of the electro-mechanical braking apparatus in which the part of the structure is omitted from a view angle according to the embodiment shown in FIG. 17 of this application; and
FIG. 21 is a diagram of a cross-sectional structure of an electro-mechanical braking apparatus in which a part of the structure is omitted from a view angle according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In this specification, the sequence numbers, such as "first" and "second", of components are merely intended to distinguish between the described objects, and do not have any sequential or technical meaning. Unless otherwise specified, the "connection" in this application includes a direct connection and an indirect connection. In the descriptions of this application, it should be understood that an orientation or a position relationship indicated by the terms "above", "below", "front", "back", "top", "bottom", "inside", "outside", and the like is based on an orientation or a position relationship shown in the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely mean that a horizontal height of the first feature is greater than that of the second feature. That the first feature is "below" or "under" the second feature may be that the first feature is right below or obliquely below the second feature, or merely mean that a horizontal height of the first feature is less than that of the second feature.

This application provides an electro-mechanical braking apparatus with an in-shaft locking mechanism. The electro-mechanical braking apparatus includes a brake motor, a gearbox, a brake, and the locking mechanism. The brake motor is in transmission connection to the brake via the gearbox and drives the brake to brake a vehicle. The gearbox includes a gear shaft for implementing a transmission function. The locking mechanism is located on a side of the gearbox in an axial direction of the gear shaft. The locking mechanism includes a clutch, an axial moving part, and a locking motor. The clutch is accommodated in an inner hole of the gear shaft. The axial moving part is configured to move relative to the clutch in the axial direction of the gear shaft and control the clutch to lock or release the gear shaft. The locking motor is configured to drive the axial moving part to move away from or toward the clutch. The electro-mechanical braking apparatus in this application has a small volume while implementing a parking function.

This application provides a vehicle, including a wheel and the electro-mechanical braking apparatus. The electro-mechanical braking apparatus is configured to brake the wheel. The electro-mechanical braking apparatus reduces a volume while implementing the parking function. Therefore, both internal space and reliability of the vehicle in this application are improved.

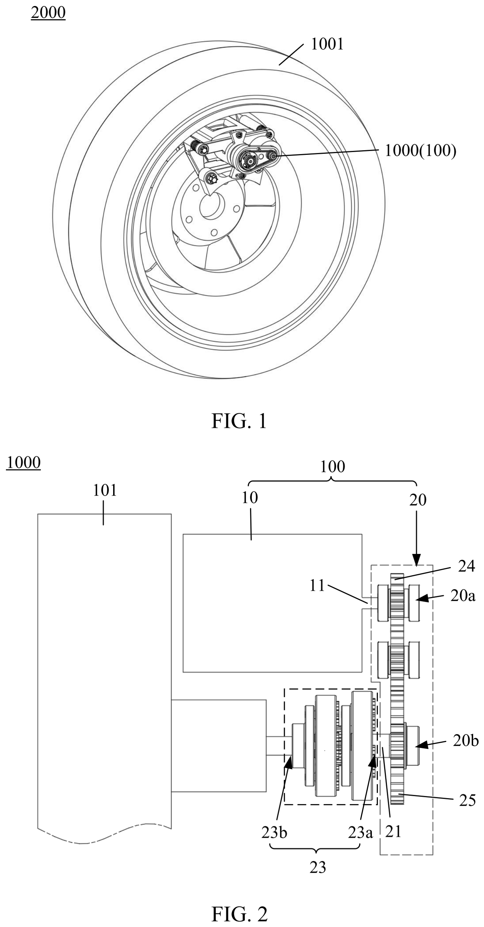

Refer to both FIG. 1 and FIG. 2. FIG. 1 is a diagram of an operating scenario of a vehicle 2000 according to an embodiment of this application. FIG. 2 is a plane diagram of a partial structure of an electro-mechanical braking apparatus 100 from a view angle according to an embodiment of this application. As shown in FIG. 1 and FIG. 2, the vehicle 2000 provided in this embodiment of this application includes a wheel 1001 and an electro-mechanical braking system 1000. The electro-mechanical braking system 1000 includes the electro-mechanical braking apparatus 100 and a brake 101. The electro-mechanical braking apparatus 100 is fastened to the wheel 1001, and the brake 101 is configured to brake the wheel 1001 to brake the vehicle 2000. The wheel 1001 is configured to implement a function of the vehicle 2000 to travel on the ground. The electro-mechanical braking apparatus 100 is configured to brake the wheel 1001, to control and adjust a rotation speed of the wheel 1001, and further control a traveling status of the vehicle 2000.

In the embodiment shown in FIG. 1, only one wheel 1001 and one electro-mechanical braking apparatus 100 are used as an example for description. In an actual application scenario, the electro-mechanical braking apparatus 100 may be correspondingly disposed on each wheel 1001 in the vehicle 2000.

As shown in FIG. 2, the electro-mechanical braking apparatus 100 in this application includes a brake motor 10 and a gearbox 20. The brake motor 10 is configured to provide a driving force for the brake 101, to drive the brake 101 to brake the wheel 1001. The gearbox 20 is in transmission connection between the brake motor 10 and the brake 101, and the brake motor 10 drives the brake 101 via the gearbox 20 to brake the vehicle 2000.

Specifically, as shown in FIG. 2, the brake motor 10 includes a motor shaft 11, and the brake motor 10 and the gearbox 20 are adjacently fastened to each other in an axial direction of the motor shaft 11 of the brake motor 10. An end of the motor shaft 11 of the brake motor 10 extends toward the gearbox 20 and is in transmission connection to the gearbox 20. The motor shaft 11 of the brake motor 10 rotates and drives the brake 101 via the gearbox 20 to brake the vehicle 2000.

In other words, the brake motor 10 is arranged adjacent to the gearbox 20, and the motor shaft 11 of the brake motor 10 extends into the gearbox 20 and is in transmission connection to the gearbox 20. When the motor shaft 11 of the brake motor 10 rotates around an axis of the motor shaft 11, the gearbox 20 is driven to rotate synchronously, to synchronously drive the gearbox 20 to rotate.

The gearbox 20 includes an input end 20a and an output end 20b, and the input end 20a and the output end 20b are disposed side by side in a direction perpendicular to the motor shaft 11 of the brake motor 10. The input end 20a is in transmission connection to the motor shaft 11 extending out of the brake motor 10, and the output end 20b is in transmission connection to the brake 101, so that the gearbox 20 can drive the brake 101 to operate when the motor shaft 11 of the brake motor 10 rotates and drives the gearbox 20 to rotate.

To facilitate understanding of a process in which the electro-mechanical braking apparatus 100 brakes the vehicle 2000 in this application, the brake 101 is first described in embodiments in the specification of this application.

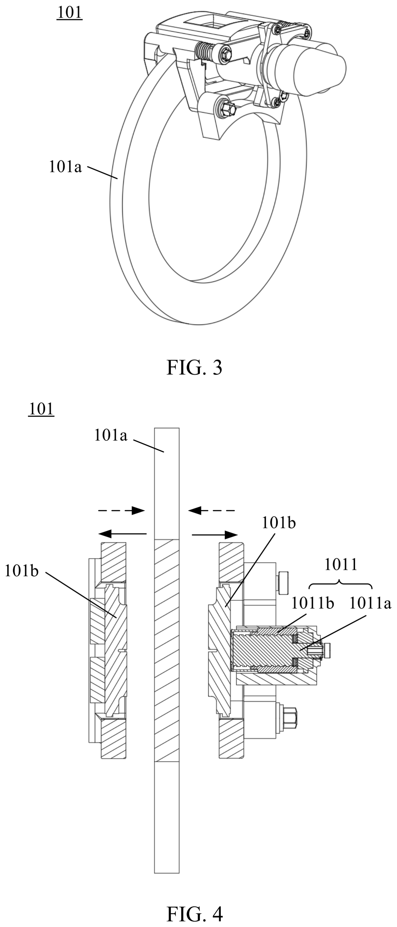

Refer to both FIG. 3 and FIG. 4. FIG. 3 is a diagram of a structure of an appearance of the brake 101 from a view angle according to an embodiment of this application. FIG. 4 is a diagram of a cross-sectional structure of the brake 101 from a view angle according to the embodiment shown in FIG. 3 of this application. As shown in FIG. 3 and FIG. 4, the brake 101 includes a brake disc 101a and a friction plate 101b. The brake disc 101a is fastened to the wheel 1001 of the vehicle 2000. In a traveling process of the vehicle 2000, the brake disc 101a may rotate with the wheel 1001.

There are two friction plates 101b, the two friction plates 101b are respectively disposed on two sides opposite to the brake disc 101a in a thickness direction of the brake disc 101a, and the friction plate 101b is in transmission connection to the gearbox 20.

When the brake motor 10 drives the brake 101 via the gearbox 20 to brake the vehicle 2000, the gearbox 20 drives the two friction plates 101b to move in directions close to each other (as shown by dashed arrows in the figure). The two friction plates 101b may be respectively in contact with two end faces opposite to the brake disc 101a and form a friction force, to reduce a rotation speed of the brake disc 101a. The brake disc 101a rotates synchronously with the wheel 1001. Therefore, a decrease in the rotation speed of the brake disc 101a synchronously causes a decrease in the rotation speed of the wheel 1001, to brake the wheel 1001. Therefore, the electro-mechanical braking apparatus 100 brakes the vehicle 2000.

In other words, when the brake motor 10 is started, the brake motor 10 achieves effect of power transfer via the gearbox 20. To be specific, the brake motor 10 inputs power from the input end 20a of the gearbox 20 to the gearbox 20, and outputs the power from the output end 20b of the gearbox 20 to the brake 101, to drive the brake 101 to brake the vehicle 2000.

In the specification of this application, the foregoing process of braking the vehicle 2000 is defined as a "driving braking mode" of the electro-mechanical braking apparatus 100 in this application. In other words, the "driving braking mode" may be understood as that when the vehicle 2000 is in a traveling state, the brake motor 10 is started and drives the brake 101 via the gearbox 20 to brake the vehicle 2000, so that a traveling speed of the vehicle 2000 decreases or the vehicle 2000 stops traveling, that is, a function of braking the vehicle 2000 is implemented.

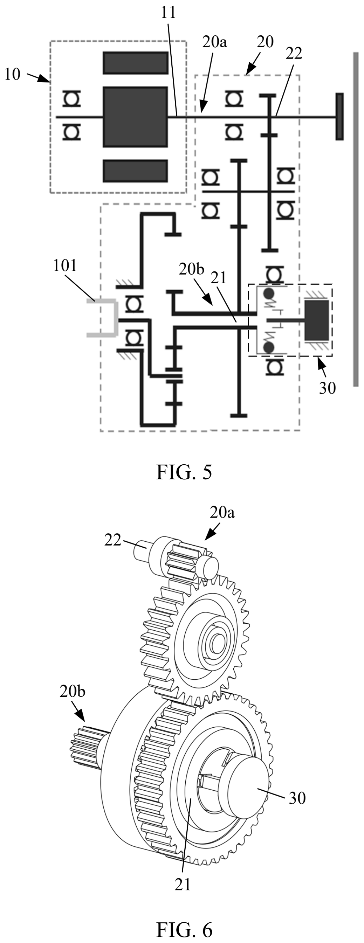

FIG. 5 is a diagram of a plane structure of the electro-mechanical braking apparatus 100 from a view angle according to an embodiment of this application. As shown in FIG. 5, the electro-mechanical braking apparatus 100 includes a locking mechanism 30, and the locking mechanism 30 is configured to implement a parking function of the vehicle 2000.

Specifically, the gearbox 20 includes a gear shaft 21. After inputting power from the input end 20a of the gearbox 20, the brake motor 10 drives the gear shaft 21 in the gearbox 20 to rotate around an axis of the gear shaft 21, to implement power transfer in the gearbox 20, so that the power input by the brake motor 10 can be output from the output end 20b of the gearbox 20 to the brake 101, to drive the brake 101 to operate.

The locking mechanism 30 is located on a side of the gearbox 20 in an axial direction of the gear shaft 21. The locking mechanism 30 is in transmission connection to the gear shaft 21, and is configured to lock a movement status of the gear shaft 21.

When the locking mechanism 30 operates, the locking mechanism 30 is in a "parking state". In this case, the locking mechanism 30 locks the gear shaft 21, so that the gear shaft 21 cannot rotate around the axis of the gear shaft 21. Therefore, power transmission of the brake motor 10 in the gearbox 20 can be locked, that is, the brake motor 10 is blocked.

When the locking mechanism 30 does not operate, the locking mechanism 30 is in a "disconnected state". In this case, the locking mechanism 30 stops locking the gear shaft 21, so that the gear shaft 21 can rotate around the axis of the gear shaft 21. Therefore, when the brake motor 10 operates, the gear shaft 21 may rotate around the axis of the gear shaft 21 and can implement a power transfer function in the gearbox 20, so that the brake motor 10 can drive the brake 101 via the gearbox 20 to brake the vehicle 2000. Therefore, the driving braking mode of the electro-mechanical braking apparatus 100 in this application is implemented.

In the specification of this application, a process in which the locking mechanism 30 is in the parking state and power transfer of the brake motor 10 is locked via the gearbox 20 is defined as the "parking braking mode" of the electro-mechanical braking apparatus 100 in this application. In other words, the "parking braking mode" may be understood as a process in which the locking mechanism 30 is started and power transfer of the brake motor 10 in the gearbox 20 is locked.

It may be understood that when the locking mechanism 30 is in different states, the locking mechanism 30 can cooperate with the brake 101 to form different braking modes for the vehicle 2000, to meet different braking modes of the electro-mechanical braking apparatus 100 for the vehicle 2000 in this application, and improve braking effect of the electro-mechanical braking apparatus 100 on the vehicle 2000 in this application.

For example, in a possible embodiment, when the electro-mechanical braking apparatus 100 uses the parking braking mode for the vehicle 2000, the brake motor 10 operates and drives the brake 101 to brake the vehicle 2000 and decelerate the vehicle 2000 to a stop, and then the locking mechanism 30 locks the gear shaft 21 in the gearbox 20. Because the gear shaft 21 is locked by the locking mechanism 30, the gear shaft 21 cannot continue to rotate around the axis of the gear shaft 21. In this case, the two friction plates 101b of the brake 101 always abut against and clamp the brake disc 101a, so that the brake 101 continuously brakes the vehicle 2000. This can avoid a dangerous phenomenon like slipping or other displacement existing when the vehicle 2000 is in the driving braking mode, and improve braking reliability and effectiveness of the electro-mechanical braking apparatus 100.

For example, in a possible embodiment, when the electro-mechanical braking apparatus 100 cancels the parking braking mode for the vehicle 2000, the locking mechanism 30 stops locking the gear shaft 21, so that the gear shaft 21 can rotate around the axis of the gear shaft 21 and can implement a power transfer function of the brake motor 10 in the gearbox 20.

For example, after the locking mechanism 30 stops locking the gear shaft 21, the brake motor 10 may drive the brake 101 via the gearbox 20 to brake the vehicle 2000.

For example, after the locking mechanism 30 stops locking the gear shaft 21, the brake motor 10 moves in a reverse direction and may drive the two friction plates 101b of the brake 101 via the gearbox 20 to move in directions away from each other, to release the brake disc 101a, so that the vehicle 2000 can travel, that is, a state in which the electro-mechanical braking apparatus 100 brakes the vehicle 2000 is released.

The following describes the locking mechanism 30 of the electro-mechanical braking apparatus 100 in this application with reference to accompanying drawings and specific embodiments in this specification of this application.

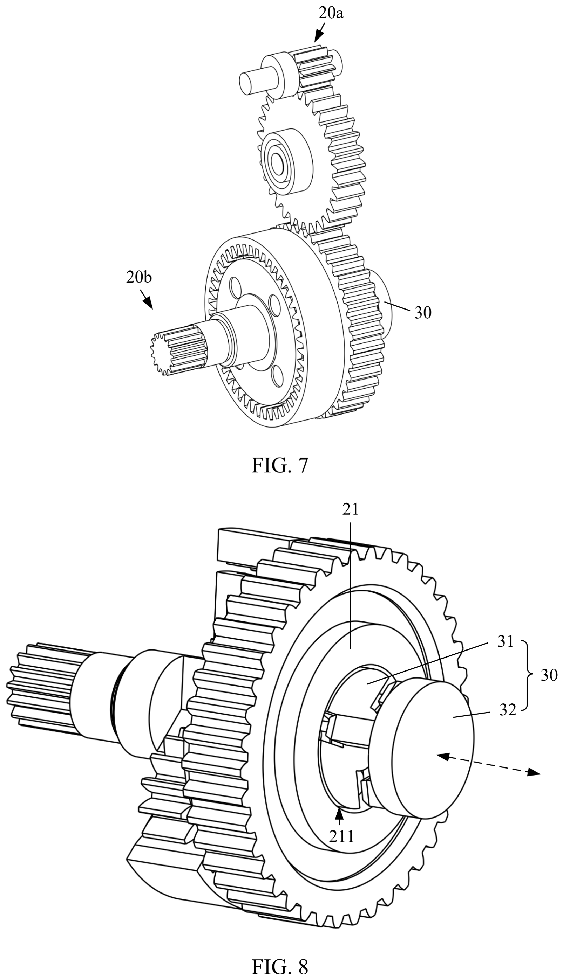

Refer to FIG. 6 and FIG. 7 together with FIG. 5. FIG. 6 is a diagram of a structure of an appearance of the electro-mechanical braking apparatus 100 in which a part of a structure is omitted from a view angle according to an embodiment of this application. FIG. 7 is a diagram of a structure of the electro-mechanical braking apparatus 100 in which the part of the structure is omitted from another view angle according to the embodiment shown in FIG. 6 of this application. In the specification of this application, an example in which the gear shaft 21 is located at the output end 20b of the gearbox 20 is used for description.

As shown in FIG. 5 to FIG. 7, the gearbox 20 includes an input shaft 22. The input shaft 22 is located at the input end 20a of the gearbox 20, and extends out of the gearbox 20 toward the brake motor 10 in an axial direction of the input shaft 22.

The input shaft 22 is in coaxial transmission with the motor shaft 11 of the brake motor 10. The motor shaft 11 of the brake motor 10 rotates around the axis of the motor shaft 11 to synchronously drive the input shaft 22 to rotate, so that the brake motor 10 inputs power from the input end 20a of the gearbox 20.

In a direction perpendicular to the axial direction of the motor shaft 11 of the brake motor 10, the gear shaft 21 and the input shaft 22 are parallel and spaced from each other, and the gear shaft 21 is located at the output end 20b of the gearbox 20.

In the axial direction of the gear shaft 21, the gear shaft 21 extends toward the brake 101 and is in transmission connection to the brake 101, to drive the brake 101 to operate, that is, the gear shaft 21 is used as a power output shaft of the gearbox 20 to output power of the brake motor 10 to the brake 101, to drive the brake 101 to operate.

As shown in FIG. 5, in the axial direction of the gear shaft 21, the locking mechanism 30 and the brake 101 are respectively located on two opposite sides of the gear shaft 21, that is, the brake 101 is arranged opposite to the locking mechanism 30.

The locking mechanism 30 can lock the gear shaft 21, to prevent the brake motor 10 from driving, via the gearbox 20, the brake 101 to operate, so as to implement the parking braking mode of the electro-mechanical braking apparatus 100.

In an embodiment, the brake 101 is arranged adjacently to the brake motor 10 in a direction perpendicular to the gear shaft 21. Specifically, as shown in FIG. 5, in the axial direction of the gear shaft 21, both the brake 101 and the brake motor 10 are located on a same side of the gearbox 20, and are located on a side that is of the gearbox 20 and that is away from the locking mechanism 30.

It may be understood that, in an actual structure design of the electro-mechanical braking apparatus 100, to ensure effect of braking the vehicle 2000, the brake motor 10 usually needs to input power with high power to meet a braking requirement and braking strength. Therefore, both the brake motor 10 and the brake 101 have large volumes. The brake 101 and the brake motor 10 are disposed on the same side of the gearbox 20, and the locking mechanism 30 with a small volume is disposed on the other side of the gearbox 20, to properly arrange the electro-mechanical braking apparatus 100 and reduce a volume.

It should be noted that, in the embodiments shown in FIG. 5 to FIG. 7 in this application, only an example in which the gear shaft 21 is the power output shaft of the gearbox 20 and the locking mechanism 30 is disposed opposite to the brake 101 in the axial direction of the gear shaft 21 is used for description, but an arrangement position of the locking mechanism 30 is not limited thereto. In another embodiment of this application, the arrangement position of the locking mechanism 30 may be adjusted based on an actual design requirement and a braking requirement of the vehicle 2000. This is not specifically limited in this application.

In other words, the locking mechanism 30 is configured to lock a power transmission process of the brake motor 10 in the gearbox 20. For the power transmission process of the brake motor 10 in the entire gearbox 20, only the locking mechanism 30 needs to lock the power transmission process. The gearbox 20 has several stages of transmission in the direction perpendicular to the motor shaft 11 of the brake motor 10. In this case, the locking mechanism 30 may be in transmission connection to a gear shaft at any stage of transmission in the gearbox 20, and may lock power transmission of the brake motor 10 in the gearbox 20 via the gear shaft.

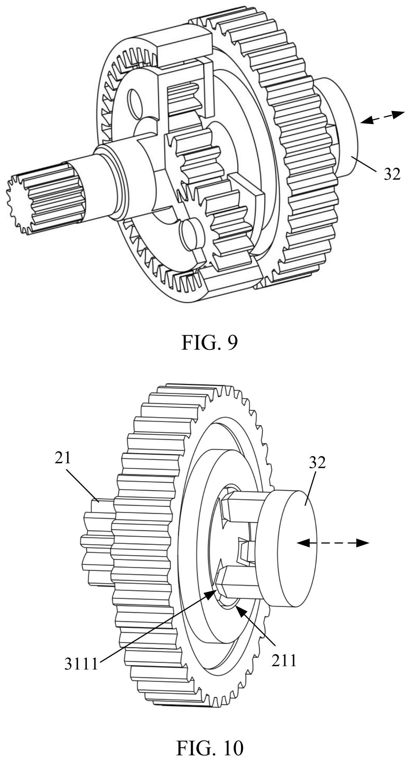

Refer to both FIG. 8 and FIG. 9. FIG. 8 is a diagram of a structure of an appearance of the electro-mechanical braking apparatus 100 in which a part of the structure is omitted from a view angle according to an embodiment of this application. FIG. 9 is a diagram of a structure of an appearance of the electro-mechanical braking apparatus 100 in which the part of the structure is omitted from another view angle according to the embodiment shown in FIG. 8 of this application.

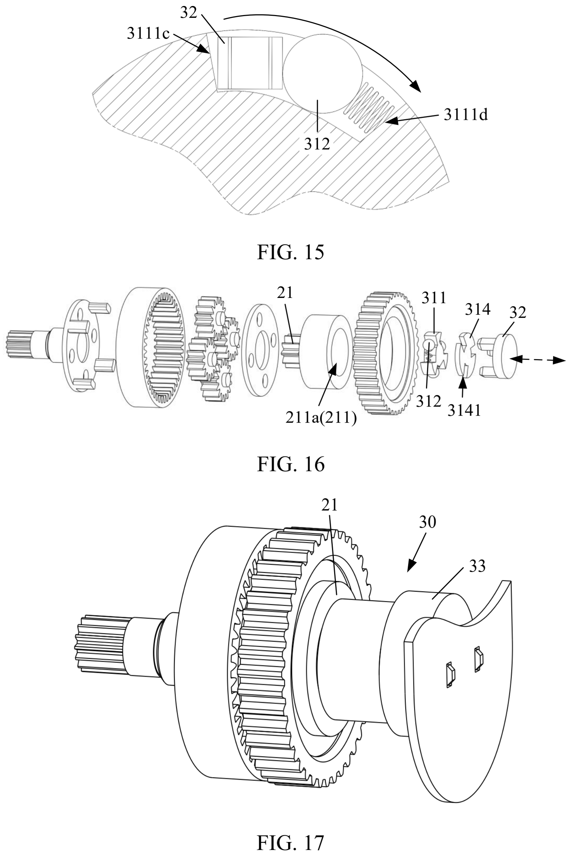

As shown in FIG. 8 and FIG. 9, the locking mechanism 30 includes a clutch 31, an axial moving part 32, and a locking motor 33 (as shown in FIG. 17). The clutch 31 is accommodated in an inner hole 211 of the gear shaft 21. The axial moving part 32 is configured to move relative to the clutch 31 in the axial direction of the gear shaft 21 and control the clutch 31 to lock or release the gear shaft 21. The locking motor 33 is configured to drive the axial moving part 32 to move away from or toward the clutch 31 (a moving direction of the axial moving part 32 is shown by a dashed arrow in the figure).

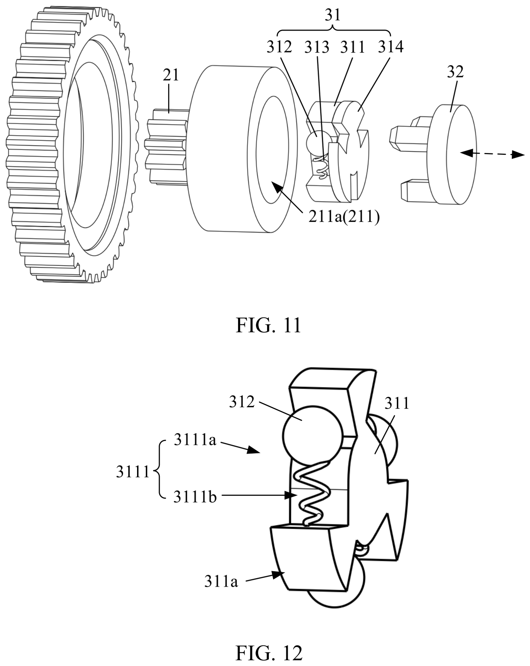

Specifically, refer to FIG. 10 to FIG. 12 together. FIG. 10 is a diagram of a structure of an appearance of the electro-mechanical braking apparatus 100 in which the part of the structure is omitted from a view angle according to the embodiment shown in FIG. 8 of this application. FIG. 11 is a diagram of an exploded structure of the electro-mechanical braking apparatus 100 in which the part of the structure is omitted from a view angle according to the embodiment shown in FIG. 10 of this application. FIG. 12 is a diagram of a structure of an appearance of the clutch 31 of the electro-mechanical braking apparatus 100 in which the part of the structure is omitted from a view angle according to the embodiment shown in FIG. 11 of this application.

As shown in FIG. 10 and FIG. 12, in the axial direction of the gear shaft 21, the locking mechanism 30 is disposed at an end that is of the gear shaft 21 and that is away from the brake 101. An end that is of the gear shaft 21 and that faces the locking mechanism 30 is provided with the inner hole 211, and the inner hole 211 extends, in the axial direction of the gear shaft 21, from the gear shaft to an end that is away from the locking mechanism 30. In addition, an inner wall of the gear shaft 21 is constructed as an inner circumferential surface 211a of the inner hole 211. In other words, the inner circumferential surface 211a encircles the axis of the gear shaft 21 to form an accommodation cavity at the end that is of the gear shaft 21 and that faces the locking mechanism 30, so that the clutch 31 can be accommodated in the inner hole 211.

It may be understood that the clutch 31 is accommodated in the inner hole 211, so that the clutch 31 can lock or release the gear shaft 21 from inside of the gear shaft 21. There is no need to separately design structure space on a periphery of the gear shaft 21 for arranging the clutch 31, and a structure feature of the gear shaft 21 can be used to simplify an internal structure design of the electro-mechanical braking apparatus 100. Further, a volume of the locking mechanism 30 can be reduced to reduce the overall volume of the electro-mechanical braking apparatus 100.

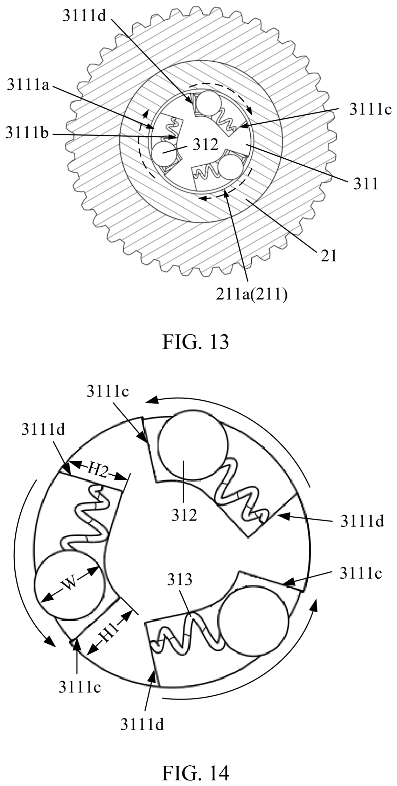

Refer to FIG. 13 together with FIG. 12. FIG. 13 is a diagram of a cross-sectional structure of the electro-mechanical braking apparatus 100 in which the part of the structure is omitted from a view angle according to the embodiment shown in FIG. 10 of this application. As shown in FIG. 12 and FIG. 13, the clutch 31 includes an inner gear 311 and a movable part 312. The inner gear 311 is coaxially fastened to the gear shaft 21, so that when the gear shaft 21 rotates around the axis of the gear shaft 21, the inner gear 311 can be synchronously driven to rotate around the axis of the gear shaft 21. In this way, the clutch 31 can rotate synchronously with the gear shaft 21.

An outer circumferential surface 311a of the inner gear 311 is provided with a groove 3111, and the movable part 312 is disposed in the groove 3111 and can move in the groove 3111 in a circumferential direction of the gear shaft 21. The movable part 312 can move in the groove 3111 in the circumferential direction of the gear shaft 21, so that the clutch 31 can lock or release the gear shaft 21.

Specifically, as shown in FIG. 12 and FIG. 13, the groove 3111 extends in a circumferential direction of the inner gear 311, and the groove 3111 includes an opening 3111a and a bottom wall 3111b that are disposed opposite to each other in a radial direction of the inner gear 311.

In the radial direction of the inner gear 311, the opening 3111a of the groove 3111 is closer to the inner circumferential surface 211a of the inner hole 211 of the gear shaft 21 than the bottom wall 3111b. In other words, the opening 3111a of the groove 3111 faces the inner circumferential surface 211a of the inner hole 211 of the gear shaft 21, and compared with the opening 3111a, the bottom wall 3111b is located, in the radial direction of the inner gear 311, on a side that is of the groove 3111 and that is away from the inner hole 211.

Further, as shown in FIG. 13, in the radial direction of the inner gear 311, a relative distance between the opening 3111a and the bottom wall 3111b is a groove depth of the groove 3111. In addition, the groove depth of the groove 3111 gradually decreases in the circumferential direction of the gear shaft 21, that is, the relative distance between the opening 3111a and the bottom wall 3111b gradually decreases in the circumferential direction of the inner gear 311.

It may be understood that the bottom wall 3111b of the groove 3111 is the outer circumferential surface 311a that is of the inner gear 311 and that corresponds to a position of the groove 3111. The opening 3111a of the groove 3111 is a notch formed at a position corresponding to the groove 3111 on the outer circumferential surface 311a of the inner gear 311. The relative distance between the opening 3111a and the bottom wall 3111b may be understood as a relative distance, in the radial direction of the inner gear 311, between the bottom wall 3111b of the groove 3111 and the outer circumferential surface 311a that is of the inner gear 311 and that is close to the inner hole 211.

The clutch 31 is accommodated in the inner hole 211 of the gear shaft 21, and the movable part 312 in the groove 3111 can move in the circumferential direction of the gear shaft 21. Therefore, when the groove depth of the groove 3111 defined by the clutch 31 changes, a relative distance between the movable part 312 in the radial direction of the gear shaft 21 and the inner circumferential surface 211a of the inner hole 211 of the gear shaft 21 can be changed, and then a magnitude of a contact force generated between the movable part 312 and the inner circumferential surface 211a of the inner hole 211 when the movable part 312 moves in the groove 3111 is changed.

When contact forces of different magnitudes are generated between the movable part 312 and the inner circumferential surface 211a of the inner hole 211, friction forces of different magnitudes are generated, so that the locking mechanism 30 forms different braking states for the gear shaft 21, that is, the locking mechanism 30 can lock or release the gear shaft 21.

For example, in a possible embodiment, when the movable part 312 moves in the groove 3111 in the circumferential direction of the inner gear 311 to a position with a large groove depth, the movable part 312 and the inner circumferential surface 211a of the inner hole 211 of the gear shaft 21 are separated or have a small contact force, so that the gear shaft 21 can rotate in the gearbox 20 and implement a transmission function of the gearbox 20. In this way, the brake motor 10 drives the brake 101 via the gearbox 20 to brake the vehicle 2000, to implement the driving braking mode of the electro-mechanical braking apparatus 100, or the brake motor 10 can drive the brake 101 via the gearbox 20 to cancel braking on the vehicle 2000.

For example, in a possible embodiment, when the movable part 312 moves in the groove 3111 to a position with a small groove depth, the contact force between the movable part 312 and the inner circumferential surface 211a of the inner hole 211 of the gear shaft 21 is large, and a friction force between the gear shaft 21 and the movable part 312 increases correspondingly, so that the gear shaft 21 cannot rotate in the gearbox 20, and then the locking mechanism 30 locks the gear shaft 21. In this case, the transmission function of the gearbox 20 is suspended, so that the electro-mechanical braking apparatus 100 in this application implements the parking braking mode for the vehicle 2000.

For example, refer to FIG. 14 together with FIG. 13. FIG. 14 is a diagram of a cross-sectional structure of the clutch 31 of the electro-mechanical braking apparatus 100 in which the part of the structure is omitted from a view angle according to the embodiment shown in FIG. 13 of this application. As shown in FIG. 13 and FIG. 14, in the circumferential direction of the gear shaft 21, the groove 3111 has a first end 3111c and a second end 3111d that are opposite to each other.

The groove 3111 has a first groove depth H1 at the first end 3111c, the groove 3111 has a second groove depth H2 at the second end 3111d, and the first groove depth H1 is greater than the second groove depth H2. In addition, the first groove depth H1 is a maximum groove depth of the groove 3111, and the second groove depth H2 is a minimum groove depth of the groove 3111.

As shown in FIG. 13, when the movable part 312 moves in the groove 3111 from the first end 3111c to the second end 3111d in the circumferential direction of the gear shaft 21 (as shown by a dashed curve arrow in FIG. 13), as the groove depth of the groove 3111 gradually decreases from the first end 3111c to the second end 3111d, when the movable part 312 moves toward the second end 3111d, the contact force between the movable part 312 and the inner circumferential surface 211a of the inner hole 211 of the gear shaft 21 gradually increases, and a friction force between the movable part 312 and the inner hole 211 synchronously increases, so that the gear shaft 21 cannot rotate, that is, a function of locking the gear shaft 21 by the locking mechanism 30 can be implemented.

As shown in FIG. 14, when the movable part 312 moves in the groove 3111 from the second end 3111d to the first end 3111c in the circumferential direction of the gear shaft 21 (as shown by a solid curve arrow in FIG. 14), as the groove depth of the groove 3111 gradually increases from the second end 3111d to the first end 3111c, when the movable part 312 moves toward the first end 3111c, the contact force between the movable part 312 and the inner circumferential surface 211a of the inner hole 211 of the gear shaft 21 gradually decreases, and the friction force between the movable part 312 and the inner hole 211 gradually decreases. In other words, the movable part 312 is gradually separated from the inner circumferential surface 211a of the inner hole 211, so that locking on the gear shaft 21 by the locking mechanism 30 is released, that is, the locking mechanism 30 releases the gear shaft 21, so that the gear shaft 21 can rotate around the axis of the gear shaft 21.

It should be noted that, in the embodiments shown in FIG. 13 and FIG. 14, only examples in which the movable part 312 is located at the first end 3111c and the movable part 312 is located at the second end 3111d are used for description. However, it is not limited that the function of locking or releasing the gear shaft 21 by the locking mechanism 30 can be correspondingly implemented only when the movable part 312 is located at the first end 3111c or the second end 3111d.

In other words, when the movable part 312 moves to different positions in the groove 3111, the movable part 312 abuts against the inner circumferential surface 211a of the inner gear 311 with different contact forces and friction forces, so that locking effect of different degrees can be achieved on the gear shaft 21.

In an embodiment, as shown in FIG. 14, in an axial direction of the inner gear 311, a cross-sectional shape of the bottom wall 3111b of the groove 3111 is an arc. Specifically, the bottom wall 3111b of the groove 3111 is a surface having a specific curvature and smooth transition, so that when the movable part 312 moves in the groove 3111 and abuts against the inner circumferential surface 211a of the inner gear 311 to different degrees, stepless locking effect of the locking mechanism 30 on the gear shaft 21 can be implemented, and insensible switching of the locking mechanism 30 between different locking degrees of the gear shaft 21 can be implemented, to improve locking effect and locking stability of the locking mechanism 30 on the gear shaft 21.

In an embodiment, as shown in FIG. 14, the inner gear 311 includes at least two grooves 3111, a quantity of movable parts 312 is the same as a quantity of grooves 3111, and each groove 3111 is configured to accommodate one movable part 312.

Specifically, in the circumferential direction of the inner gear 311, at least two grooves 3111 are equally spaced from each other on the outer circumferential surface 311a of the inner gear 311, and one movable part 312 that can move in the circumferential direction of the inner gear 311 is disposed in each corresponding groove 3111. As shown in FIG. 14, a minimum groove depth end of one of two adjacent grooves 3111 is close to a maximum groove depth end of the other groove 3111 in the circumferential direction of the inner gear 311.

For example, as shown in FIG. 14, in the circumferential direction of the inner gear 311, a first end 3111c of a groove 3111 is closer, than a second end 3111d of the groove 3111, to a second end 3111d of another groove 3111 adjacent to the groove 3111.

That is, in the circumferential direction of the inner gear 311, groove depths of grooves 3111 of the inner gear 311 gradually decrease toward a same direction.

It may be understood that the at least two grooves 3111 are equally spaced from each other in the circumferential direction of the inner gear 311, and minimum groove depth ends of the grooves 3111 are located on same sides of the grooves 3111 in the circumferential direction of the inner gear 311, so that the movable parts 312 can move toward a same rotation direction in the circumferential direction of the inner gear 311, and the contact force between the movable part 312 and the inner circumferential surface 211a of the inner hole 211 of the gear shaft 21 changes synchronously. This facilitates locking or releasing of the gear shaft 21 by the clutch 31.

In an embodiment, a minimum groove depth of each groove 3111 is less than a length of the movable part 312 in the radial direction of the inner gear 311.

Specifically, as shown in FIG. 14, corresponding to the movable part 312 in each groove 3111, the movable part 312 has a maximum outer diameter W in the radial direction of the inner gear 311. In the embodiment shown in FIG. 14, the movable part 312 is a sphere, and the maximum outer diameter W of the movable part 312 may be understood as a diameter of the movable part 312.

The minimum groove depth of the groove 3111 is less than the maximum outer diameter W of the corresponding movable part 312, that is, the second groove depth H2 of the groove 3111 is less than the maximum outer diameter W of the movable part 312.

A minimum groove depth of each groove 3111 is set to be less than the length of the movable part 312 in the radial direction of the inner gear 311, that is, the second groove depth H2 of the groove 3111 is set to be less than the maximum outer diameter W of the movable part 312. This can ensure that when each movable part 312 moves in the corresponding groove 3111 to the minimum groove depth end, a reliable contact force and a reliable friction force are generated between the movable part 312 and the inner circumferential surface 211a of the inner hole 211, to ensure locking effect and locking reliability on the gear shaft 21 by the locking mechanism 30.

In an embodiment, a maximum groove depth of each groove 3111 is greater than the length of the movable part 312 in the radial direction of the inner gear 311.

Specifically, as shown in FIG. 14, corresponding to the movable part 312 in each groove 3111, in the radial direction of the inner gear 311, the maximum groove depth of the groove 3111 is greater than the maximum outer diameter W of the corresponding movable part 312, that is, the first groove depth H1 of the groove 3111 is greater than the maximum outer diameter W of the movable part 312.

The maximum groove depth of each groove 3111 is set to be greater than the length of the movable part 312 in the radial direction of the inner gear 311. This can ensure that when each movable part 312 moves in the corresponding groove 3111 to the maximum groove depth end, the movable part 312 is separated from the inner circumferential surface 211a of the inner hole 211, so that the locking mechanism 30 can completely release the gear shaft 21, to ensure effect and stability of rotation of the gear shaft 21 around the axis of the gear shaft 21.

It should be noted that, in the embodiment shown in FIG. 14, only an example in which a structure shape of the movable part 312 is a sphere is used for description, but embodiments of this application are not limited to that the structure shape of the movable part 312 can be set to only the sphere. In other words, in another embodiment of this application, the movable part 312 may be of another structure, and a specific structure shape and structure size may be adjusted based on an actual design requirement.

In an embodiment, refer to FIG. 14 together with FIG. 10. The clutch 31 includes an elastic part 313, and the elastic part 313 is configured to cooperate with the axial moving part 32 to drive the movable part 312 to move back and forth in the circumferential direction of the inner gear 311. In other words, the elastic part 313 may be configured to drive the movable parts 312 to move synchronously in the grooves 3111, and rotation directions of the movable parts 312 are the same.

Specifically, as shown in FIG. 10, in the axial direction of the gear shaft 21, the axial moving part 32 moves relative to the inner gear 311, and at least a part of the axial moving part 32 may extend into the groove 3111 in the axial direction of the inner gear 311.

The elastic part 313 is disposed in the groove 3111 of the inner gear 311, and extends in the circumferential direction of the inner gear 311.

The elastic part 313 is elastically connected between the movable part 312 and the inner gear 311, that is, an end of the elastic part 313 is connected to the movable part 312, and the opposite end of the elastic part 313 is connected to a side wall of the groove 3111 in the circumferential direction of the inner gear 311, so that the elastic part 313 can cooperate with the axial moving part 32 to drive the movable part 312 to move back and forth in the circumferential direction of the inner gear 311, and the locking mechanism 30 can lock or release the gear shaft 21.

In an embodiment, when the axial moving part 32 moves away from the clutch 31, the elastic part 313 is configured to drive the movable part 312 to move counterclockwise in the circumferential direction of the inner gear 311 (as shown by the solid curve arrow in FIG. 14).

For example, as shown in FIG. 14, an end of the elastic part 313 is connected to a side wall at the second end 3111d of the groove 3111, and the opposite end is connected to the movable part 312.

When the axial moving part 32 moves away from the clutch 31 in the axial direction of the gear shaft 21, which may also be understood as that the axial moving part 32 and the clutch 31 are separated, the elastic part 313 can drive the movable part 312 to move, in the circumferential direction of the inner gear 311, from the second end 3111d of the groove 3111 to the first end 3111c of the groove 3111, that is, the movable part 312 moves counterclockwise in the circumferential direction of the inner gear 311.

In the embodiment shown in FIG. 14, a groove depth of the first end 3111c of the groove 3111 is greater than a groove depth of the second end 3111d of the groove 3111, and the elastic part 313 drives the movable part 312 to move in a direction in which the groove depth of the groove 3111 gradually increases. In this case, the contact force between the movable part 312 and the inner circumferential surface 211a of the inner hole 211 gradually decreases, and the friction force between the movable part 312 and the inner circumferential surface 211a also gradually decreases until the friction force disappears, so that the locking mechanism 30 can release the gear shaft 21, and then the gear shaft 21 can rotate around the axis of the gear shaft 21.

It should be noted that, in the embodiment shown in FIG. 14, only an example in which the elastic part 313 is configured to drive the movable part 312 to move counterclockwise in the circumferential direction of the inner gear 311 when the axial moving part 32 moves away from the clutch 31 is used for description, but embodiments of this application are not limited to that the movable part 312 can move only counterclockwise in the circumferential direction of the inner gear 311 when the axial moving part 32 moves away from the clutch 31.

In other words, when the axial moving part 32 moves away from the clutch 31, a movement direction in which the elastic part 313 drives the movable part 312 in the circumferential direction of the inner gear 311 may be changed based on actual arrangement positions of the movable part 312 and the elastic part 313 in the groove 3111.

For example, in a possible embodiment, when the axial moving part 32 moves away from the clutch 31, the elastic part 313 may alternatively be configured to drive the movable part 312 to move clockwise in the circumferential direction of the inner gear 311.

In an embodiment, when the axial moving part 32 moves toward the clutch 31, the movable part 312 is driven to move clockwise (as shown by a solid curve arrow in FIG. 15) in the circumferential direction of the inner gear 311.

For example, refer to FIG. 15. FIG. 15 is a diagram of a partial cross-sectional structure of the locking mechanism 30 of the electro-mechanical braking apparatus 100 in which the part of the structure is omitted from a view angle according to the embodiment shown in FIG. 13 of this application. As shown in FIG. 15, when the axial moving part 32 moves toward the clutch 31 in the axial direction of the gear shaft 21, and at least a part of the axial moving part 32 extends into the groove 3111 of the inner gear 311, the axial moving part 32 extends into the groove 3111 from a side that is of the movable part 312 and that is away from the elastic part 313.

The axial moving part 32 occupies some space of the groove 3111 after extending into the groove 3111. In this case, the axial moving part 32 abuts against the movable part 312 and synchronously drives the movable part 312 to move, in the circumferential direction of the inner gear 311, from the first end 3111c of the groove 3111 to the second end 3111d of the groove 3111, that is, the axial moving part 32 drives the movable part 312 to move clockwise in the circumferential direction of the inner gear 311.

In the embodiment shown in FIG. 15, the groove depth of the first end 3111c of the groove 3111 is greater than the groove depth of the second end 3111d of the groove 3111, and the axial moving part 32 abuts against the movable part 312 and drives the movable part 312 to move in a direction in which the groove depth of the groove 3111 gradually decreases. In this case, the contact force between the movable part 312 and the inner circumferential surface 211a of the inner hole 211 gradually increases, and the friction force between the movable part 312 and the inner circumferential surface 211a also gradually increases, so that the gear shaft 21 cannot rotate around the axis of the gear shaft 21, and then the locking mechanism 30 can lock the gear shaft 21.

It should be noted that, in the embodiment shown in FIG. 15, only an example in which the movable part 312 is driven to move clockwise in the circumferential direction of the inner gear 311 when the axial moving part 32 moves toward the clutch 31 is used for description, but embodiments of this application are not limited to that the movable part 312 can move only clockwise in the circumferential direction of the inner gear 311 when the axial moving part 32 moves toward the clutch 31.

In other words, when the axial moving part 32 moves toward the clutch 31, a direction in which the movable part 312 is driven to move in the circumferential direction of the inner gear 311 may be changed based on actual arrangement positions of the movable part 312 and the elastic part 313 in the groove 3111.

For example, in a possible embodiment, when the axial moving part 32 moves toward the clutch 31, the movable part 312 is driven to move counterclockwise in the circumferential direction of the inner gear 311.

It may be understood that, as shown in FIG. 15, when the axial moving part 32 extends into the groove 3111, the movable part 312 is synchronously driven to squeeze the elastic part 313. In this case, the elastic part 313 is in a squeezed state, and stores elastic potential energy. After the axial moving part 32 moves away from the clutch 31 and extends out of the groove 3111, the elastic part 313 releases the elastic potential energy and drives the movable part 312 to move in the circumferential direction of the inner gear 311, that is, the movable part 312 can be driven to move back and forth in the circumferential direction of the inner gear 311 through cooperation between the axial moving part 32 and the elastic part 313.

In an embodiment, refer to FIG. 16. FIG. 16 is a diagram of an exploded structure of the locking mechanism 30 of the electro-mechanical braking apparatus 100 in which the part of the structure is omitted from a view angle according to the embodiment shown in FIG. 11 of this application. As shown in FIG. 16, the clutch 31 includes an end cover 314. The end cover 314 may be configured to cover the groove 3111 and limit a sliding track of the movable part 312 in the groove 3111.

Specifically, as shown in FIG. 16, the end cover 314 is disposed on a side that is of the inner gear 311 and that is close to the locking motor 33 in the axial direction of the gear shaft 21, and the end cover 314 is attached to the inner gear 311, to limit displacement of the movable part 312 in the groove 3111 in the axial direction of the gear shaft 21, so that the movable part 312 moves in the circumferential direction of the inner gear 311. This can further improve locking effect and locking reliability of the locking mechanism 30 on the gear shaft 21.

In an embodiment, as shown in FIG. 16, an end face that is of the end cover 314 and that faces the locking motor 33 includes a fitting opening 3141, and the fitting opening 3141 communicates with the groove 3111 in the axial direction of the gear shaft 21. The axial moving part 32 drives the movable part 312 through the fitting opening 3141.

Specifically, as shown in FIG. 16, in the axial direction of the gear shaft 21, the end cover 314 has two opposite end faces. One end face is attached to the inner gear 311, and the opposite end face is provided with the fitting opening 3141. The fitting opening 3141 penetrates the end cover 314 in the axial direction of the gear shaft 21, which may also be understood as that the fitting opening 3141 penetrates the two opposite end faces of the end cover 314.

A quantity of fitting openings 3141 is the same as a quantity of grooves 3111, and a position of each fitting opening 3141 corresponds to a position of each groove 3111 on the inner gear, so that at least a part of the axial moving part 32 can pass through the end cover 314 from the fitting opening 3141 and extend into the corresponding groove 3111 on the inner gear 311, and then can drive the movable part 312 to move in the circumferential direction of the inner gear 311.

In other words, the end cover 314 is provided with the fitting opening 3141 facing the locking motor 33, so that the axial moving part 32 can pass through the fitting opening 3141 to drive the movable part 312 to move.

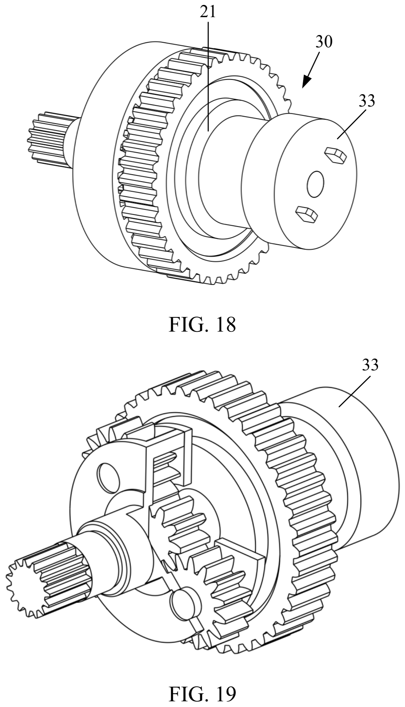

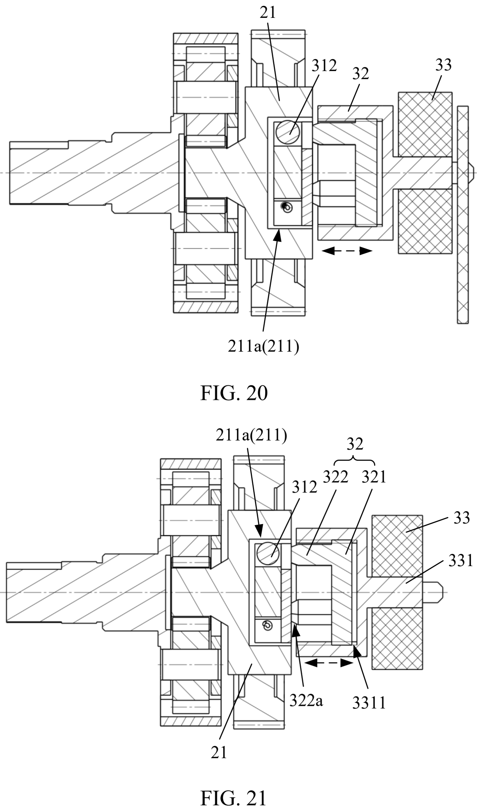

In an embodiment, refer to FIG. 17 to FIG. 20. FIG. 17 is a diagram of a structure of an appearance of the electro-mechanical braking apparatus 100 in which a part of the structure is omitted from a view angle according to an embodiment of this application. FIG. 18 is a diagram of a structure of an appearance of the electro-mechanical braking apparatus 100 in which the part of the structure is omitted from another view angle according to the embodiment shown in FIG. 17 of this application. FIG. 19 is a diagram of a structure of an appearance of the electro-mechanical braking apparatus 100 in which the part of the structure is omitted from still another view angle according to the embodiment shown in FIG. 17. FIG. 20 is a diagram of a cross-sectional structure of the electro-mechanical braking apparatus 100 in which the part of the structure is omitted from a view angle according to the embodiment shown in FIG. 17 of this application.

As shown in FIG. 17 to FIG. 20, the locking motor 33 is disposed, in the axial direction of the gear shaft 21, on a side that is of the gear shaft 21 and that is away from the brake 101. In other words, in the axial direction of the gear shaft 21, the locking motor 33 is disposed on a side that is of the axial moving part 32 and that is away from the clutch 31, and the locking motor 33 is in transmission connection to the axial moving part 32 and is configured to drive the axial moving part 32 to move in the axial direction of the gear shaft 21, to provide a driving force for the locking mechanism 30 to lock or release the gear shaft 21.

In an embodiment, as shown in FIG. 20, in the axial direction of the gear shaft 21, the axial moving part 32 is located between the clutch 31 and the locking motor 33, and axes of the locking motor 33, the axial moving part 32, the clutch 31, and the gear shaft 21 coincide. It may be understood that the axes of the locking motor 33, the axial moving part 32, the clutch 31, and the gear shaft 21 coincide. This helps evenly distribute power output by the locking motor 33 to the grooves 3111 of the inner gear 311.

In an embodiment, refer to FIG. 21 together with FIG. 16. FIG. 21 is a diagram of a cross-sectional structure of the electro-mechanical braking apparatus 100 in which a part of the structure is omitted from a view angle according to an embodiment of this application. As shown in FIG. 16 and FIG. 21, the axial moving part 32 includes a transmission portion 321 and a pushing portion 322. The transmission portion 321 is configured to be in transmission connection to a motor shaft 331 of the locking motor 33 and move in a direction of the motor shaft 331 of the locking motor 33 as the motor shaft 331 of the locking motor 33 rotates. The pushing portion 322 is configured to receive a driving force of the pushing portion to move toward the motor shaft 331 of the locking motor 33 and drive the movable part 312.

Specifically, as shown in FIG. 21, in an axial direction of the motor shaft 331 of the locking motor 33, the pushing portion 322 is located between the transmission portion 321 and the movable part 312, the pushing portion 322 is fastened to the transmission portion 321, and the transmission portion 321 is in transmission connection to the motor shaft 331 of the locking motor 33 and is configured to convert rotation motion of the motor shaft 331 of the locking motor 33 to movement in the axial direction of the motor shaft 331 of the locking motor 33.

When the motor shaft 331 of the locking motor 33 rotates around an axis of the motor shaft 331, the motor shaft 331 of the locking motor 33 synchronously drives the transmission portion 321 to move in the axial direction of the motor shaft 331 of the locking motor 33, so that the transmission portion 321 drives the pushing portion 322 to move in the axial direction of the motor shaft 331 of the locking motor 33, and then in the axial direction of the gear shaft 21, the axial moving part 32 can move toward the clutch 31 or move away from the clutch 31.

In other words, the transmission portion 321 of the axial moving part 32 is configured to convert the rotation motion of the motor shaft 331 of the locking motor 33 to displacement of the pushing portion 322 in the axial direction of the motor shaft 331 of the locking motor 33, to implement cooperative movement of the pushing portion 322 and the movable part 312.

In an embodiment, as shown in FIG. 21, an end that is of the pushing portion 322 and that faces the clutch 31 includes a fitting slope 322a, and a tilt direction of the fitting slope 322a intersects the axial direction of the motor shaft 331 of the locking motor 33. It may be understood that, with cooperation between the fitting slope 322a and the movable part 312, a pushing force applied by the pushing portion 322 on the movable part 312 can be reduced, thereby reducing power of the locking motor 33 and reducing a volume of the locking motor 33.

In addition, the fitting slope 322a is disposed at the end that is of the pushing portion 322 and that faces the clutch 31, so that when the pushing portion 322 extends into the groove 3111, it is easier to push the movable part 312 to move in the circumferential direction of the inner gear 311, thereby improving locking stability and locking effect of the locking mechanism 30.

In an embodiment, as shown in FIG. 21, in the axial direction of the gear shaft 21, an end that is of the motor shaft 331 of the locking motor 33 and that faces the clutch 31 is provided with a through hole 3311, and the through hole 3311 is sleeved at a periphery of the transmission portion 321. The transmission portion 321 may move in the through hole 3311 in the axial direction of the gear shaft 21.

An inner circumferential surface of the through hole 3311 is provided with an internal thread extending in the axial direction of the motor shaft 331 of the locking motor 33, and an outer circumferential surface of the transmission portion 321 is provided with an external thread fitting the internal thread, so that when the motor shaft 331 rotates around the axis of the motor shaft 331, the transmission portion 321 can be driven to move in the axial direction of the motor shaft 331 of the locking motor 33.

It may be understood that the transmission portion 321 is disposed in the through hole 3311, so that a volume of the locking mechanism 30 can be further reduced, thereby implementing miniaturization of the electro-mechanical braking apparatus 100 in this application.

It should be noted that, in this embodiment of this application, only a possible embodiment of the transmission portion 321 is used as an example for description, but a manner of driving the transmission portion 321 to move in the axial direction of the gear shaft 21 in this application is not limited. In another embodiment of this application, the transmission portion 321 may be driven to move in the axial direction of the gear shaft 21 in another manner.

For example, in a possible embodiment, the transmission portion 321 includes a transmission screw and a threaded hole. The threaded hole penetrates the transmission portion 321 in the direction of the motor shaft 331 of the locking motor 33. The transmission screw is sleeved on the motor shaft 331 of the locking motor 33 and is fastened to the motor shaft 331 of the locking motor 33. The transmission portion 321 is sleeved on the transmission screw through the threaded hole. An external thread of the transmission screw is engaged with an internal thread of the threaded hole.

With cooperation between the screw and the threaded hole, a rotation action of the motor shaft 331 of the locking motor 33 can be reliably converted to a displacement action of the transmission portion 321 in the axial direction of the motor shaft 331 of the locking motor 33.

In an embodiment, still refer to FIG. 2. As shown in FIG. 2, the gearbox 20 includes a planetary gear train 23. An axis of the planetary gear train 23 coincides with the axis of the gear shaft 21, and the gear shaft 21 is disposed at an input end 23a of the planetary gear train 23. An output end 23b of the planetary gear train 23 is in transmission connection to a reversing mechanism (not shown in the figure) of the brake 101. The planetary gear train 23 may achieve a large rotation speed ratio change in small space, an inner diameter of a planetary input gear is large, and the locking mechanism 30 may be arranged in the internal space of the planetary input gear.

In an embodiment, the gearbox 20 includes a motor gear 24 and the planetary input gear 25. The motor gear 24 is coaxially fastened to the motor shaft 11 of the brake motor 10, and the planetary input gear 25 is coaxially fastened to the gear shaft 21. In the direction perpendicular to the gear shaft 21, the motor gear 24 and the planetary input gear 25 are spaced from each other and in transmission connection. In this embodiment, the motor gear 24 is in transmission connection to the planetary input gear 25, so that power of the brake motor 10 can be reliably transferred to the planetary gear train, and a volume of the gearbox 20 can be reduced.

In an embodiment, still refer to FIG. 4. As shown in FIG. 4, the reversing mechanism of the brake 101 includes a ball screw 1011, and the ball screw 1011 includes a screw rod 1011a and a screw sleeve 1011b that are engaged with each other. The screw rod 1011a is in coaxial transmission with the output end 23b of the planetary gear train 23. The screw sleeve 1011b of the ball screw 1011 is configured to push the friction plate 101b of the brake 101 to move in an axial direction of the reversing mechanism to brake the vehicle 2000.

It may be understood that the ball screw 1011 has high transmission precision and a small friction loss, and can improve transmission efficiency of the electro-mechanical braking apparatus 100 by cooperating with the planetary gear train 23.

The electro-mechanical braking apparatus is usually further equipped with the locking mechanism to implement a parking function. Limited by internal space of the vehicle, the motor, the mechanical drive mechanism, the brake, and the locking mechanism in the electro-mechanical braking apparatus occupy large space, and it is impossible to implement miniaturization of the electro-mechanical braking apparatus.

However, in this application, the electro-mechanical braking apparatus 100 drives the gearbox 20 via the brake motor 10 to rotate, to drive the brake 101 to brake the vehicle 2000. When the vehicle 2000 is parked, the gear shaft 21 of the gearbox 20 may be locked by the locking mechanism 30, to control the gearbox 20 to stop transmission. In this case, the brake 101 locks the brake disc 101a to implement a parking function.

In this application, the electro-mechanical braking apparatus 100 drives the axial moving part 32 via the locking motor 33 to move away from or toward the clutch 31, to drive the clutch 31 to lock or release the gear shaft 21. In this application, the clutch 31 of the electro-mechanical braking apparatus 100 is disposed in the inner hole 211 of the gear shaft 21. This reduces the overall volume of the locking mechanism 30. Therefore, the electro-mechanical braking apparatus 100 in this application has a small volume while implementing a parking function.

The electro-mechanical braking system 1000 of this application implements braking by using the electro-mechanical braking apparatus 100 of this application. The electro-mechanical braking apparatus 100 in this application reduces the volume of the electro-mechanical braking apparatus 100 while implementing a parking function, and both internal space and reliability of the electro-mechanical braking system 1000 in this application are improved.

In other words, the electro-mechanical braking system 1000 in this application carries the electro-mechanical braking apparatus 100 in this application. Therefore, the electro-mechanical braking system 1000 has all possible beneficial effect of the electro-mechanical braking apparatus 100 in this application.

Further, the electro-mechanical braking system 1000 in this application carries the electro-mechanical braking apparatus 100 in this application, and the electro-mechanical braking apparatus 100 in this application reduces the volume of the electro-mechanical braking apparatus 100 on a premise of implementing the parking function. Therefore, both internal space and reliability of the vehicle 2000 in this application are improved.

In other words, because the vehicle 2000 in this application carries the electro-mechanical braking system 1000 in this application, the vehicle 2000 has all possible beneficial effect of the electro-mechanical braking system 1000 in this application.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An electro-mechanical braking apparatus with an in-shaft locking mechanism, wherein the electro-mechanical braking apparatus comprises a brake motor, a gearbox, and the locking mechanism, the brake motor drives a brake via the gearbox to brake a vehicle, the gearbox comprises a gear shaft configured to implement a transmission function, the locking mechanism is located on a side of the gearbox in an axial direction of the gear shaft, and the locking mechanism comprises a clutch, an axial moving part, and a locking motor, wherein
the clutch is accommodated in an inner hole of the gear shaft;
the axial moving part is configured to move relative to the clutch in the axial direction of the gear shaft and control the clutch to lock or release the gear shaft; and
the locking motor is configured to drive the axial moving part to move away from or toward the clutch.

2. The electro-mechanical braking apparatus according to claim 1, wherein the clutch comprises an inner gear and a movable part, wherein
the inner gear is coaxially fastened to the gear shaft, an outer circumferential surface of the inner gear is provided with a groove, an opening of the groove faces an inner circumferential surface of the inner hole of the gear shaft, and a groove depth of the groove gradually decreases in a circumferential direction of the gear shaft; and
the movable part is configured to move in the groove in the circumferential direction of the gear shaft.

3. The electro-mechanical braking apparatus according to claim 2, wherein the inner gear comprises at least two grooves, a quantity of movable parts is the same as a quantity of grooves, and each groove is configured to accommodate one movable part, wherein
the at least two grooves are equally spaced from each other in a circumferential direction of the inner gear; and
a minimum groove depth end of one of two adjacent grooves is close to a maximum groove depth end of the other groove in the circumferential direction of the inner gear.

4. The electro-mechanical braking apparatus according to claim 3, wherein a minimum groove depth of each groove is less than a length of the movable part in a radial direction of the inner gear, and a maximum groove depth of each groove is greater than the length of the movable part in the radial direction of the inner gear.

5. The electro-mechanical braking apparatus according to claim 2, wherein the clutch comprises an elastic part, and the elastic part is configured to cooperate with the axial moving part to drive the movable part to move back and forth in the circumferential direction of the inner gear, wherein
the axial moving part moves toward the clutch and drives the movable part to move clockwise in the circumferential direction of the inner gear, and when the axial moving part moves away from the clutch, the elastic part is configured to drive the movable part to move counterclockwise in the circumferential direction of the inner gear; or
the axial moving part moves toward the clutch and drives the movable part to move counterclockwise in the circumferential direction of the inner gear, and when the axial moving part moves away from the clutch, the elastic part is configured to drive the movable part to move clockwise in the circumferential direction of the inner gear.

6. The electro-mechanical braking apparatus according to any one of claims 2 to 5, wherein the clutch comprises an end cover, wherein
the end cover is disposed on a side that is of the inner gear and that is close to the locking motor in the axial direction of the gear shaft, an end face that is of the end cover and that faces the locking motor comprises a fitting opening, the fitting opening communicates with the groove in the axial direction of the gear shaft, and the axial moving part drives the movable part through the fitting opening.

7. The electro-mechanical braking apparatus according to any one of claims 2 to 5, wherein the axial moving part comprises a transmission portion and a pushing portion, wherein
the transmission portion is configured to be in transmission connection to a motor shaft of the locking motor and move in a direction of the motor shaft of the locking motor with rotation of the motor shaft of the locking motor; and
the pushing portion is configured to receive a driving force of the transmission portion to move in the direction of the motor shaft of the locking motor and drive the movable part.

8. The electro-mechanical braking apparatus according to claim 7, wherein an end that is of the pushing portion and that faces the clutch comprises a fitting slope, and a tilt direction of the fitting slope intersects an axial direction of the motor shaft of the locking motor.

9. The electro-mechanical braking apparatus according to claim 7, wherein the transmission portion comprises a transmission screw and a threaded hole, the threaded hole penetrates the transmission portion in the direction of the motor shaft of the locking motor, the transmission screw is sleeved on the motor shaft of the locking motor and is fastened to the motor shaft of the locking motor, the transmission portion is sleeved on the transmission screw through the threaded hole, and an outer thread of the transmission screw is engaged with an inner thread of the threaded hole.

10. The electro-mechanical braking apparatus according to any one of claims 1 to 5, wherein in the axial direction of the gear shaft, the axial moving part is located between the clutch and the locking motor, and axes of the locking motor, the axial moving part, the clutch, and the gear shaft coincide.

11. An electro-mechanical braking system, wherein the electro-mechanical braking system comprises a brake and the electro-mechanical braking apparatus according to any one of claims 1 to 10, and the electro-mechanical braking apparatus is configured to drive the brake to brake a vehicle, wherein
in an axial direction of a gear shaft of a gearbox in the electro-mechanical braking apparatus, the brake is arranged opposite to a locking mechanism in the electro-mechanical braking apparatus; and
in a direction perpendicular to the gear shaft, the brake is arranged adjacently to a brake motor in the electro-mechanical braking apparatus.

12. The electro-mechanical braking system according to claim 11, wherein the gearbox comprises a planetary gear train, an axis of the planetary gear train coincides with an axis of the gear shaft, the gear shaft is disposed at an input end of the planetary gear train, and an output end of the planetary gear train is in transmission connection to a reversing mechanism of the brake.

13. The electro-mechanical braking system according to claim 12, wherein the reversing mechanism of the brake comprises a ball screw, the ball screw comprises a screw rod and a screw sleeve that are engaged with each other, the screw rod is in coaxial transmission with the output end of the planetary gear train, and the screw sleeve of the ball screw is configured to push a friction plate of the brake to move in an axial direction of the reversing mechanism to brake the vehicle.

14. The electro-mechanical braking system according to claim 12, wherein the gearbox comprises a motor gear and a planetary input gear, the motor gear is coaxially fastened to a motor shaft of the brake motor, the planetary input gear is coaxially fastened to the gear shaft, and in the direction perpendicular to the gear shaft, the motor gear and the planetary input gear are spaced from each other and in transmission connection.

15. A vehicle, comprising a wheel and the electro-mechanical braking system according to any one of claims 11 to 14, wherein the electro-mechanical braking apparatus is configured to brake the wheel.
